# EUROPEAN PATENT APPLICATION

(11) **EP 4 841 710 A1**
(43) Date of publication of application: **18.11.2026**
(21) Application number: 26166468.4
(22) Date of filing: 20.03.2026
(51) Int. Cl.: H01M 4/505, H01M 4/525, C01G 53/04

(54) **CATHODE ACTIVE MATERIAL, ELECTRODE, AND SECONDARY BATTERY**

(30) Priority: 16.05.2025 JP 2025082490
(71) Applicant: Prime Planet Energy & Solutions, Inc., Chuo-ku, Tokyo 103-0022 (JP)
(72) Inventor: MASAI, Kouhei, Tokyo 103-0022 (JP)
(74) Representative: Kuhnen & Wacker Patent- und Rechtsanwaltsbüro PartG mbB

(57) **Abstract**

A cathode active material disclosed herein is a lithium composite oxide having a composition represented by a formula Li₁₊ₓNi_{α}Co_{β}Mn_{γ}M_{δ}O₂ [wherein 0.01≤x≤0.07, 0.7≤α≤1, 0≤β≤0.3, 0≤γ≤0.3, 0≤δ≤0.1, α+β+γ=1, and M is at least one element selected from the group consisting of B, Al, Mg, Ca, Ti, V, Cr, Ga, Zr, Nb, Mo, In, Hf, Ta, W, and Tl], and has a form of a secondary particle that is an aggregate of primary particles. In the secondary particle, the ratio R of the number of triple junctions of the primary particles to the number of primary particles is 0.94 or lower. The primary particles have a maximum Feret's diameter median of 1.10 µm or smaller.

## Description

### BACKGROUND

The present invention relates to a cathode active material, an electrode, and a secondary battery.

In recent years, rechargeable secondary batteries such as lithium ion secondary batteries have been used as vehicle drive power sources for battery electric vehicles (BEV), plug-in hybrid electric vehicles (PHEV), or the like, and as portable power sources for mobile devices or the like. For example, a secondary battery has an electrode body, or electrode assembly, including a cathode and an anode. The cathode and anode each have an active material layer responsible for a battery reaction during charging and discharging. A technology related to such a lithium ion secondary battery is described, for example, in Japanese Patent Application Laid-Open No. 2019-149371.

### SUMMARY

For secondary batteries, slight changes in battery characteristics due to repeated use are required (requirement for good cycle characteristics).

The present disclosure has been invented under the above circumstances, and an object of the present disclosure is to provide a cathode active material of secondary batteries, an electrode, and a secondary battery, suitable for suppressing a decrease in a battery capacity due to repeated use.

According to the first aspect of the present disclosure, a cathode active material for a secondary battery is provided. This cathode active material is a lithium composite oxide having a composition represented by a formula Li₁₊ₓNi_{α}Co_{β}Mn_{γ}M_{δ}O₂ [wherein 0.01≤x≤0.07, 0.7≤α≤1, 0≤β≤0.3, 0≤γ≤0.3, 0≤δ≤0.1, α+β+γ=1, and M is at least one element selected from the group consisting of B, Al, Mg, Ca, Ti, V, Cr, Ga, Zr, Nb, Mo, In, Hf, Ta, W, and Tl], and has a form of secondary particle that is in an aggregate of primary particles. In the secondary particle, a ratio R of the number of triple junctions of the primary particles to the number of the primary particles is 0.94 or lower. The primary particles have a maximum Feret's diameter median of 1.10 µm or smaller.

A cathode active material with this configuration is suitable for suppressing generation and progression of cracking in the cathode active material secondary particle due to repeated charging and discharging of a secondary battery, and further suitable for suppressing a decrease in the battery capacity. The reason for this is as follows.

In an Ni-containing active material in a cathode of a secondary battery subjected to repeated charging and discharging, a crystal lattice is expanded and contracted accompanying a change in Ni valence linked to the charging and discharging. There is a tendency that the higher the Ni ratio in the cathode active material, the stronger the anisotropy of the expansion and contraction and furthermore, the greater the dimensional change of the crystal lattice due to the expansion and contraction. Accordingly, at the triple junctions of the primary particles in the secondary particle of the cathode active material, strain of the crystal lattice due to the expansion and contraction tends to concentrate from multiple directions to generate a great local stress (since concentration of strain from multiple directions leads to an increase in strain and in strain mismatch, the local stress at triple junctions tends to increase compared to other regions). In the cathode active material with the above configuration, the ratio R (number of triple junctions per one primary particle) of as low as 0.94 or lower helps to reduce such local stress in the secondary particle.

Furthermore, there is a tendency that the larger the size of each primary particle constituting the cathode active material secondary particle, the greater the strain generated during expansion and contraction. In the cathode active material with the above configuration, the primary particle's maximum Feret's diameter median of as small as 1.10 µm or smaller in the secondary particle helps to reduce the local stress due to the strain of the primary particles.

The reduction in the local stress in the cathode active material secondary particle due to these combined effects is suitable for suppressing generation and progression of cracking in the particle, and therefore suitable for suppressing decrease in a battery capacity due to repeated use of a secondary battery having a cathode containing the cathode active material (useful for improving a capacity retention ratio during a high-temperature cycle test). Specifically, this is as described later with reference to Examples and Comparative Examples.

According to the second aspect of the present disclosure, an electrode is provided. This electrode includes a current collector and an electrode active material layer on the current collector. The electrode active material layer contains the cathode active material according to the first aspect in the present disclosure. In such an electrode, the cathode active material in the electrode active material layer exhibits the technical effects described above for the first aspect.

According to the third aspect of the present disclosure, a secondary battery is provided. This secondary battery includes an electrode body having a cathode and an anode. The cathode comprises a current collector, and a cathode active material layer on the current collector. The cathode active material layer includes the cathode active material according to the first aspect of the present disclosure. In such a secondary battery, the cathode active material in the cathode active material layer in the electrode body exhibits the technical effects described above for the first aspect.

### BRIEF DESCRIPTION OF THE DRAWINGS

FIG. 1 is a schematic cross-sectional view illustrating an internal structure of a secondary battery according to an embodiment of the present disclosure;
FIG. 2 is a schematic diagram illustrating a configuration of an electrode body provided in the secondary battery illustrated in FIG. 1;
FIG. 3 is a schematic cross-sectional view partially illustrating a cathode of the electrode body illustrated in FIG. 2; and
FIG. 4 is a partially-enlarged schematic cross-sectional view illustrating a cathode active material particle contained in a cathode active material layer illustrated in FIG. 3.

### DETAILED DESCRIPTION OF THE PREFERRED EMBODIMENTS

A cathode active material for a lithium ion secondary battery will be explained below as an embodiment of the present invention with reference to the drawings. In this specification, the term "secondary battery" refers to a general rechargeable power storage device. The present invention can be implemented based on the content disclosed herein and the common technical knowledge in the field. Note that matters that are not specifically mentioned herein but necessary for implementing the present invention (e.g. general configuration and manufacturing process of a secondary battery that does not characterize the present invention) can be understood as matters designed by those skilled in the art on the basis of the prior art in the field.

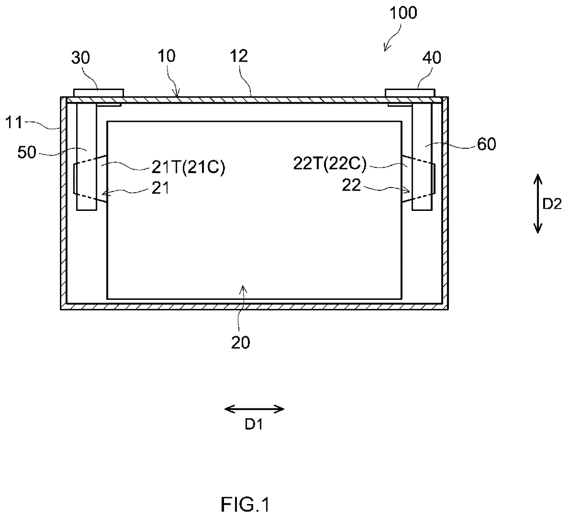

FIG. 1 is a schematic cross-sectional view illustrating an internal structure of a battery 100 according to an embodiment of the present disclosure. The battery 100 includes a case 10, an electrode body 20 (electrode assembly), a cathode terminal 30 (positive terminal), an anode terminal 40 (negative terminal), and an electrolytic solution (not illustrated). In this embodiment, the battery 100 is a lithium ion secondary battery.

The case 10 is a housing for the battery 100 and accommodates the electrode body 20 and the electrolytic solution. The case 10 has a case body 11 and a sealing plate 12 in this embodiment. The case 10 or the case body 11 has a flat and rectangular parallelepiped (e.g. square) outer shape, extending in a first direction D1 in this embodiment. In this embodiment, the case 10 or the case body 11 has a height in a second direction D2 as one direction perpendicular to the first direction D1 and a thickness in a direction perpendicular to both the first direction D1 and the second direction D2. The case body 11 has an opening on its upper end in the height direction in the drawing. The sealing plate 12 closes this opening. For example, the sealing plate 12 of the case 10 has an injection hole (not illustrated) for injecting the electrolytic solution into the case 10. The injection hole is sealed by a sealing member after injection of the electrolytic solution. Examples of a constituent material for this case 10 include aluminum, an aluminum alloy, iron, and an iron alloy.

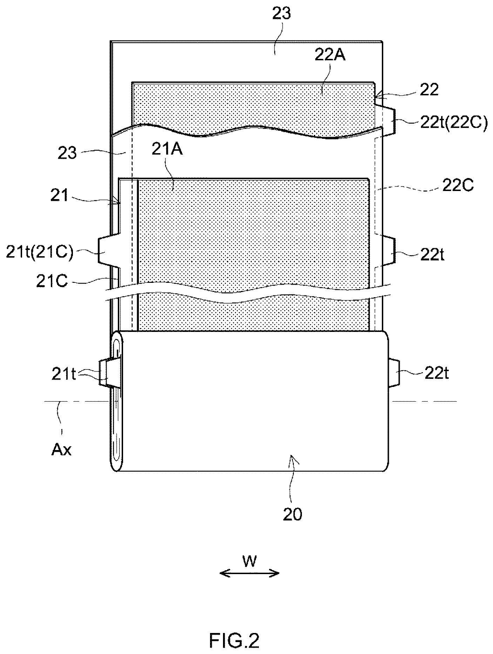

FIG. 2 is a schematic diagram illustrating a configuration of the electrode body 20. The electrode body 20 includes a laminated structure with a cathode 21 (positive electrode), an anode 22 (negative electrode), and a separator 23 interposed therebetween. The electrode body 20 is a flat wound electrode body, which is formed by winding an elongated sheet-like laminate (having a width in a direction perpendicular to its longitudinal direction) with the elongated sheet-like cathode 21, the elongated sheet-like separator 23, the elongated sheet-like anode 22, and an additional elongated sheet-like separator 23 arranged in this order. After winding, the wound electrode body is flattened by pressing. This electrode body 20 (wound electrode body) is accommodated in the case 10 with its winding axis Ax extending in the first direction D1 in FIG. 1. Instead of this configuration described above, the electrode body 20 may be a laminated electrode body with a quadrate cathode and a quadrate anode insulatively laminated. A plurality of electrode bodies 20 may be accommodated in the case 10 so as to be arranged in the thickness direction of the case 10.

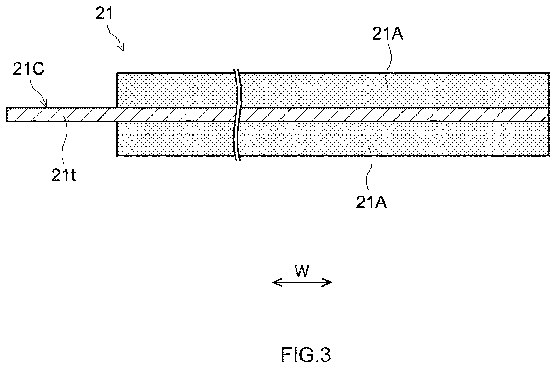

The cathode 21 has a laminated structure including a cathode current collector 21C and cathode active material layers 21A. In this embodiment, the cathode 21 has the cathode active material layers 21A on both sides of the cathode current collector 21C (described later in detail with reference to FIG. 3). In this embodiment, the cathode current collector 21C has a plurality of tabs 21t on one end (left end in FIG. 2) of the electrode body 20 or cathode 21 in the width direction W. The width direction W refers to a direction perpendicular to the longitudinal direction of the elongated sheet-like laminate. In the cathode current collector 21C, the tabs 21t are included in an exposed region where the cathode active material layer 21A is not laminated. In the wound electrode body 20, the multiple tabs 21t are stacked in the laminating direction of the laminated structure of the electrode body 20 to form a cathode tab portion 21T (illustrated in FIG. 1) (in the cathode current collector 21C, the tabs 21t are provided in that arrangement). The cathode tab portion 21T functionally serves as the current collection portion in the cathode 21. In this integrally stacked state, the tabs 21t are connected to the cathode current collection plates 50 (cathode current collection plates 50 are provided on each cathode tab portion 21T). Examples of a constituent material for the cathode current collection plate 50 include aluminum and an aluminum alloy. Examples of the method for connecting the cathode current collection plates 50 to the cathode tab portion 21T in the cathode 21 include ultrasonic joining and laser welding.

The anode 22 has a laminated structure including an anode current collector 22C and anode active material layers 22A. In this embodiment, the anode 22 has the anode active material layers 22A on both sides of the anode current collector 22C (not illustrated). The anode current collector 22C is made of a conductive metal foil or a resin sheet with a double-sided conductive metal layer. Examples of a constitutive metal for the anode current collector 22C include copper and a copper alloy. The anode active material layers 22A contain an anode active material (negative active material) capable of reversibly storing and releasing charge carriers. Examples of the anode active material include a carbon material such as graphite, hard carbon, and soft carbon. The graphite may be natural graphite or artificial graphite. The anode active material may also be a silicon-containing material. Examples of the silicon-containing material include silicon (Si), silicon oxide represented by SiOₓ (0.05<x<1.95), an Si-C composite containing Si particles in carbon particles, and lithium silicate (LiₓSi_{y}O_{z}). The anode active material layers 22A may contain additives other than the anode active material. Examples of the additives include a binder and a thickener. Examples of the binder include a rubber material such as styrene-butadiene rubber (SBR) and a fluororesin such as polyvinylidene fluoride (PVDF). Examples of the thickener include a cellulose material such as carboxymethylcellulose (CMC).

The anode current collector 22C has a plurality of tabs 22t on the other end (right end in FIG. 2) of the electrode body 20 or the anode 22 in the width direction W. In the anode current collector 22C, the tabs 22t are included in an exposed region where the anode active material layer 22A is not laminated. In the electrode body 20 that is a wound electrode body, the multiple tabs 22t are laminated in the laminating direction of the laminated structure of the electrode body 20 to form anode tab portion 22T (illustrated in FIG. 1) (in the anode current collector 22C, the tabs 22t are provided in that arrangement). The anode tab portion 22T functionally serves as the current collection portion in the anode 22. In this integrally stacked state, the tabs 22t are connected to the anode current collection plates 60 (anode current collection plates 60 are provided on each anode tab portion 22T). Examples of a constituent material for the anode current collection plates 60 include copper and a copper alloy. Examples of the method for connecting the anode current collection plates 60 to the anode tab portion 22T in the anode 22 include ultrasonic joining and laser welding.

The separator 23 is intended to insulate between the cathode active material layers 21A and the anode active material layers 22A while retaining an ion-conductive electrolytic solution therebetween. A porous resin sheet made of a polyolefin resin is preferable as the separator 23. Examples of the polyolefin resin include polyethylene (PE) and polypropylene (PP). A heat resistance layer (HRL) containing an inorganic filler may be provided on the surface of the separator 23. Examples of a constituent material for the inorganic filler include alumina, boehmite, aluminum hydroxide, and titania.

The cathode terminal 30 is attached to the sealing plate 12 of the case 10 as illustrated in FIG. 2. For example, the sealing plate 12 has an opening for the terminal, which penetrates its constituent member (plate material) in the thickness direction, and the cathode terminal 30 is attached to the opening, for example, by caulking, with an insulative gasket interposed between the cathode terminal 30 and the sealing plate 12. Furthermore, the cathode terminal 30 is exposed to the outside and inside of the case 10. Inside the case 10, the cathode terminal 30 is connected to the cathode current collection plate 50. The cathode terminal 30 is electrically connected to the cathode 21 of the electrode body 20 via the cathode current collection plate 50. Examples of a constituent material for the cathode terminal 30 include aluminum and an aluminum alloy.

The anode terminal 40 is also attached to the sealing plate 12 (the attaching method is the same as described above for the cathode terminal 30). The anode terminal 40 is exposed to the outside and inside of the case 10. Inside the case 10, the anode terminal 40 is connected to the anode current collection plate 60. The anode terminal 40 is electrically connected to the anode 22 of the electrode body 20 via the anode current collection plate 60. Examples of a constituent material for the anode terminal 40 include copper or a copper alloy.

The electrolytic solution is a nonaqueous electrolytic solution containing a nonaqueous solvent and an electrolyte (supporting salt). Examples of the nonaqueous solvent include ethylene carbonate (EC), propylene carbonate (PC), dimethyl carbonate (DMC), diethyl carbonate (DEC), and ethyl methyl carbonate (EMC). The nonaqueous solvent may be used alone or in combination with two or more types. The electrolyte is a lithium salt, preferably a fluorine-containing lithium salt. Examples of the fluorine-containing lithium salt include lithium hexafluorophosphate (LiPF₆), lithium tetrafluoroborate (LiBF₄), and lithium bis(fluorosulfonyl)imide (LiN(SO₂F)₂). The electrolyte may be used alone or in combination with two or more types. This nonaqueous electrolytic solution permeates the electrode body 20 in the case 10. Extra nonaqueous electrolytic solution not permeating the electrode body 20 may be stored in the case 10.

FIG. 3 is a schematic cross-sectional view partially illustrating the elongated sheet-like cathode 21 in the width direction W. The cathode 21 includes the cathode current collector 21C (current collector) and the cathode active material layers 21A (electrode active material layers) on the cathode current collector 21C. In this embodiment, the cathode 21 has the cathode active material layers 21A on both sides of the cathode current collector 21C. This cathode 21 is one embodiment of the electrode in this disclosure.

The cathode current collector 21C is made of, for example, a conductive metal foil or a resin sheet with a double-sided conductive metal layer. Examples of the conductive metal for the cathode current collector 21C include aluminum, an aluminum alloy, nickel, titanium, and stainless steel. Above all, aluminum is preferable. From the viewpoint of ensuring the strength of the cathode current collector 21C and consequently the strength of the cathode 21, the cathode current collector 21C has a thickness of preferably 5 µm or larger, more preferably 8 µm or larger. From the viewpoint of reducing the volume accounted for by the cathode current collector 21C in the cathode 21 or the electrode body 20 to ensure a volume energy density of the battery 100, the cathode current collector 21C has a thickness of preferably 30 µm or smaller, more preferably 20 µm or smaller.

The cathode active material layer 21A contains a cathode active material 21P (positive active material). The cathode active material 21P is a lithium composite oxide having a composition represented by the following formula (1), preferably a lithium-nickel-cobalt-manganese composite oxide. The cathode active material 21P is an embodiment of the cathode active material in the present disclosure.

Formula: Li₁₊ₓNi_{α}Co_{β}Mn_{γ}M_{δ}O₂ (1)

[wherein 0.01≤x≤0.07, 0.7≤α≤1, 0≤β≤0.3, 0≤γ≤0.3, 0≤δ≤0.1, α+β+γ=1, and M is at least one element selected from the group consisting of B, Al, Mg, Ca, Ti, V, Cr, Ga, Zr, Nb, Mo, In, Hf, Ta, W, and Tl]

In formula (1), x satisfies 0.01≤x≤0.07, preferably 0.03≤x≤0.06. This range of x helps to achieve both reduction in the ratio R of triple junctions described later for the primary particles of the cathode active material, and reduction in the size of the primary particles (e.g. maximum Feret's diameter). From the viewpoint of achieving a high energy density at low cost for the battery 100, α satisfies 0.7≤α≤1, preferably 0.75≤α≤1, more preferably 0.8≤α≤1. From the viewpoint of improving the structural stability and electronic conductivity of the cathode active material 21P, β satisfies 0≤β≤0.3, preferably 0.1≤β≤0.3. From the viewpoint of improving the structural stability of the cathode active material 21P and reducing the cost, γ satisfies 0≤γ≤0.3, preferably 0.1≤γ≤0.3. The cathode active material represented by the above formula may have oxygen non-stoichiometry as long as a crystal structure such as a layered rock salt type structure can be maintained. The composition of the cathode active material can be confirmed, for example, by a highfrequency inductively coupled plasma (ICP) emission spectroscopy.

Examples of the crystal structure of the lithium composite oxide constituting the cathode active material 21P include a layered rock salt type crystal structure and a spinel type crystal structure. Above all, a layered rock salt type crystal structure is preferable. The crystal structure can be confirmed, for example, by X-ray diffraction.

The cathode active material 21P is in a form of a secondary particle that is an aggregate of the primary particles. A ratio of voids between primary particles in the secondary particle of the cathode active material 21P is preferably 5 vol% or lower, more preferably 3 vol% or lower, even more preferably 1 vol% or lower, particularly preferably 0.5 vol% or lower.

From the viewpoint of ensuring the particle strength, the secondary particles of the cathode active material 21P have an average particle diameter D₅₀ of preferably 10 µm or larger, more preferably 13 µm or larger, even more preferably 15 µm or larger. From the viewpoint of ensuring the fillability of the secondary particles of the cathode active material 21P in the cathode active material layer 21A, the secondary particles of the cathode active material 21P have an average particle diameter D₅₀ of preferably 20 µm or smaller, more preferably 17 µm or smaller. The average particle diameter D₅₀ of the secondary particles of the cathode active material 21P refers to a median diameter in the volume-based particle size distribution (particle diameter, at which the volume cumulative frequency accumulated from the smallest diameter side reaches 50%), and is determined, for example, based on a particle size distribution obtained by a laser diffraction/scattering method.

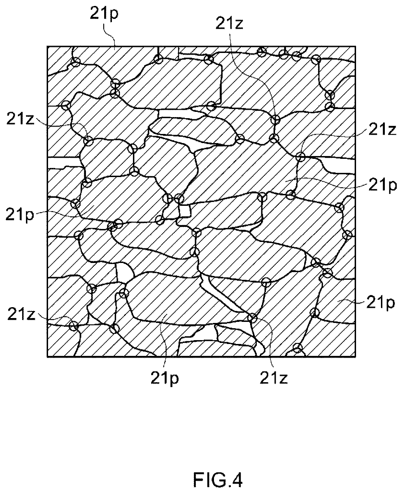

FIG. 4 is a partially-enlarged schematic cross-sectional view illustrating the secondary particles of cathode active material 21P. FIG. 4 illustrates an example of an agglomeration form of the primary particles 21p that constitute the secondary particle of the cathode active material 21P. In FIG. 4, triple junctions 21z of the primary particles 21p are surrounded by circles. In the present disclosure, in addition to the three-particle interfaces with no gap between three adjacent primary particles 21p, three-particle interfaces with a fine gap having the maximum Feret's diameter of smaller than 144 nm between three adjacent primary particles 21p are also defined as a triple junction.

In the secondary particle of the cathode active material 21P, the ratio R of the number of the triple junctions 21z of the primary particles 21p to the number of the primary particles 21p in the cathode active material 21P is 0.94 or lower, preferably 0.93 or lower, more preferably 0.92 or lower, even more preferably 0.91 or lower. This configuration helps to reduce a local stress that may occur during expansion and contraction accompanying the charging and discharging of the battery 100 in the cathode active material 21P (there is a tendency that the fewer the triple junctions 21z, the lower the overall local stress in the secondary particle). From the viewpoint of decreasing the size (e.g. maximum Feret's diameter) of the primary particles 21p to reduce the local stress due to strain of the primary particles 21p during expansion and contraction accompanying charging and discharging of the battery 100, the ratio R is preferably 0.90 or higher in the cathode active material 21P. The ratio R in the cathode active material secondary particle can be determined by a method described later in Examples. Examples of a method for adjusting the ratio R include adjustment of the size (e.g. maximum Feret's diameter) of the primary particles 21p and adjustment of orientation for the primary particles 21p. Specifically, the reaction conditions are adjusted during the cathode active material preparation process by the crystallization method described later, or the conditions (temperature, time) for the calcination described later are adjusted (FIG. 4 illustrates a state where the multiple primary particles 21p are relatively orderly oriented). Examples of the reaction conditions for the crystallization method include temperature, pH, stirring speed, various concentrations such as ammonium ion concentration, and reaction time, for the reaction liquid.

In the cathode active material 21P, the primary particles 21p have a maximum Feret's diameter median of 1.10 µm or smaller, preferably 1.08 µm or smaller, more preferably 1.06 µm or smaller. This configuration helps to reduce the local stress due to strain of the primary particles 21p during expansion and contraction accompanying the charging and discharging of the battery 100 in the cathode active material 21P (there is a tendency that the smaller the primary particles 21p, the smaller the strain of the primary particles 21p during expansion and contraction). In the cathode active material 21P (secondary particle), the primary particles 21p have the maximum Feret's diameter median of preferably 0.90 µm or larger, more preferably 0.95 µm or larger, even more preferably 0.97 µm or larger. This configuration helps to decrease the number of the triple junctions 21z, thereby to decrease the ratio R. The maximum Feret's diameter median of the primary particles in the secondary particle can be measured by a method described later in Examples. As a method for adjusting the maximum Feret's diameter median of the primary particles 21p, for example, the reaction conditions are adjusted during the cathode active material preparation process by the crystallization method described later, or the conditions (temperature, time) for the calcination described later are adjusted.

The cathode active material layer 21A may contain additives other than the cathode active material 21P. Examples of the additives include a conductive material, a binder, and another cathode active material. Examples of the conductive material include acetylene black, Ketjen black, graphite, and carbon nanotube. Examples of the binder include a fluororesin such as polyvinylidene fluoride (PVDF) and a rubber material such as styrene-butadiene rubber (SBR).

Examples of another cathode active material include a nickel (Ni)-containing lithium composite oxide. Examples of the Ni-containing lithium composite oxide include a lithium-nickel composite oxide, a lithium-nickel-cobalt composite oxide, a lithium-nickel-manganese composite oxide, a lithium-nickel-cobalt-manganese composite oxide, a lithium-nickel-cobalt-aluminum composite oxide, and a lithium-iron-nickel-manganese composite oxide. Another cathode active material preferably has a composition represented by the above formula (1), more preferably the same composition as of the cathode active material 21P.

A ratio of the cathode active material 21P in the cathode active material layer 21A is preferably 70 mass% or higher, more preferably 80 mass% or higher, even more preferably 90 mass% or higher, further preferably 95 mass% or higher, particularly preferably 98 mass% or higher.

From the viewpoint of ensuring the battery capacity, the cathode active material layer 21A has a thickness of preferably 30 µm or larger, more preferably 40 µm or larger. From the viewpoint of ensuring good rate characteristics in the battery 100, the cathode active material layer 21A has a thickness of preferably 100 µm or smaller, more preferably 90 µm or smaller, even more preferably 80 µm or smaller.

From the viewpoint of ensuring the capacity of the cathode active material layer 21A or the cathode 21, a density (electrode density) of the cathode active material layer 21A is preferably 3.2 g/cm³ or higher, more preferably 3.4 g/cm³ or higher. From the viewpoint of suppressing cracking of the cathode active material particles during rolling of the cathode active material layer 21A, the electrode density is preferably 3.7 g/cm³ or lower, more preferably 3.6 g/cm³ or lower. Examples of a method for adjusting the electrode density include adjustment of the particle diameter of the cathode active material layer 21A and regulation of the pressing pressure in a pressing step described later.

For example, the cathode active material 21P can be prepared as follows.

First, a composite hydroxide that is a precursor of the cathode active material (lithium composite oxide) is obtained by a crystallization method. In the crystallization method, for example, a raw material aqueous solution containing predetermined metal salts is added dropwise to a pH-adjusted reaction liquid while stirring the reaction liquid (crystallization reaction). The reaction liquid is, for example, ion-exchanged water at a predetermined pH. The raw material aqueous solution contains various metal salts at predetermined concentrations, which serve as sources for each metal element (excluding lithium) contained in the cathode active material to be prepared. As the metal salts, for example, a nickel salt, a cobalt salt, and a manganese salt are used depending on the composition of the cathode active material to be prepared. Examples of the nickel salt may include nickel sulfate, nickel nitrate, and nickel carbonate. Examples of the cobalt salt may include cobalt sulfate, cobalt nitrate, and cobalt carbonate. Examples of the manganese salt may include manganese sulfate, manganese nitrate, and manganese carbonate. During the crystallization reaction, the reaction liquid is maintained at a predetermined temperature or in a predetermined temperature range, and at, for example, pH 10 to 13 by adding an alkaline aqueous solution (e.g. sodium hydroxide aqueous solution), and the ammonium ion concentration is controlled, for example, to 1 to 15 g/L by adding a basic aqueous solution containing ammonium ions (e.g. ammonia water). By this crystallization reaction, the composite hydroxide that is a precursor of the cathode active material is precipitated (coprecipitated). The obtained coprecipitate (hydroxide particles) is filtered, washed with water, and dried to obtain a powder of the composite hydroxide that is the precursor of the cathode active material.

Subsequently, the obtained composite hydroxide powder and lithium hydroxide (LiOH) powder are dry-mixed in a predetermined mass ratio to prepare a mixed powder. Then, this mixed powder is calcined, for example, under ambient atmosphere. The calcination temperature is set to, for example, 650°C to 900°C, and the calcination time is set to, for example, 9 to 17 hours. Thereby, a powder of the lithium composite oxide (cathode active material 21P) having a predetermined composition can be obtained.

The cathode active material 21P for forming the cathode active material layer 21A of the cathode 21 can be prepared, for example, by the aforementioned method. For preparing the cathode 21, first, a cathode slurry containing the cathode active material 21P is prepared. Examples of the solvent for preparing the slurry include N-methyl-2-pyrrolidone (NMP), dimethylsulfoxide (DMSO), and isopropyl alcohol. The cathode slurry contains the aforementioned additives (conductive material, binder, etc.) other than the cathode active material 21P as necessary. Subsequently, both sides of the cathode current collector 21C are coated with the cathode slurry to form coating films, which are then dried to form the cathode active material layers 21A. Subsequently, the cathode active material layers 21A on both sides of the cathode current collector 21C are compressed in the thickness direction, for example, by pressing the cathode active material layers 21A between a pair of press rolls, to form consolidated (high capacity density) cathode active material layers 21A on both sides of the cathode current collector 21C (pressing step). As described above, the cathode 21 can be prepared. The battery 100 can be produced so as to include the electrode body 20 equipped with this cathode 21 as the cathode responsible for the battery reaction during charging and discharging.

The cathode active material 21P is suitable for suppressing generation and progression of cracking in the secondary particle of the cathode active material 21P during repeated charging and discharging of the battery 100, and is suitable for suppressing a decrease in the battery capacity. The reason for this is as follows.

In the Ni-containing cathode active material in the secondary battery subjected to repeated charging and discharging, a crystal lattice is expanded and contracted accompanying a change in Ni valence linked to the charging and discharging. There is a tendency that the higher the Ni ratio in the cathode active material, the stronger the anisotropy of the expansion and contraction and furthermore, the greater the dimensional change of the crystal lattice due to the expansion and contraction. Accordingly, at the triple junctions of the primary particles in the secondary particle of the cathode active material, strain of the crystal lattice due to the expansion and contraction tends to concentrate from multiple directions to generate a great local stress (since concentration of strain from multiple directions leads to an increase in strain and in strain mismatch, the local stress at triple junctions tends to increase compared to other regions). In the cathode active material 21P with the above configuration, for reducing this local stress in the secondary particle, it is helpful that the ratio R of the number of the triple junctions 21z of the primary particles 21p to the number of the primary particles 21p is as low as 0.94 or lower (preferably 0.93 or lower, more preferably 0.92 or lower, even more preferably 0.91 or lower).

Furthermore, there is a tendency that the larger the size of each primary particle constituting the cathode active material secondary particle in the secondary battery, the greater the strain generated during expansion and contraction. In the cathode active material 21P with the above configuration, for reducing the local stress due to the strain of the primary particles 21p, it is helpful that the maximum Feret's diameter median of the primary particles 21p in the secondary particle is as small as 1.10 µm or smaller (preferably 1.08 µm or smaller, more preferably 1.06 µm or smaller).

The reduction in the local stress in the secondary particle of the cathode active material 21P due to these combined effects is suitable for suppressing generation and progression of cracking in the particle, and therefore suitable for suppressing decrease in battery capacity due to repeated use of the battery 100 having the cathode active material layer 21A or cathode 21 containing the cathode active material 21P (useful for improving a capacity retention ratio during a high-temperature cycle test). For example, this is as described later with reference to Examples and Comparative Examples.

The battery 100 having this cathode active material 21P in the cathode active material layer 21A of the electrode body 20 is a battery cell usable for various applications. For example, the battery 100 can be applied to a motor power source (drive power source) mounted in vehicles such as passenger vehicles and trucks. Examples of the vehicle type include, but are not limited to, plug-in hybrid electric vehicles (PHEV), hybrid electric vehicles (HEV), and battery electric vehicles (BEV).

In the above embodiment, the battery 100 has been explained as a rectangular secondary battery including a flat electrode body 20. However, the secondary battery disclosed herein may also be a secondary battery having another shape or form. For example, the technology disclosed herein can also be applied to a lithium ion secondary battery with a laminated electrode body, a cylindrical lithium ion secondary battery, a laminated lithium ion secondary battery, and the like.

### [Examples]

Examples according to the present invention will be explained below, however, the present invention is not intended to be limited to Examples.

### [Example 1]

### <Preparation of Cathode Active Material>

First, a nickel-cobalt-manganese (NCM) composite hydroxide as a precursor of the cathode active material was obtained. Specifically, a reaction liquid was first prepared in a 5 L reaction vessel, and separately a raw material aqueous solution was prepared. The reaction liquid had undergone a dissolved oxygen removal treatment through inert gas purge and pH adjustment (at 25°C) to 11.5 to 12.0 by adding a sodium hydroxide aqueous solution (while maintaining the liquid temperature at 30°C). The raw material aqueous solution contained nickel sulfate, cobalt sulfate, and manganese sulfate in a molar ratio of Ni:Co:Mn=80:10:10 so that the total concentration of these metal salts was 1.5 mol/L. Subsequently, the raw material aqueous solution was added dropwise to the reaction liquid while stirring the reaction liquid (stirring speed: 500 rpm), and the mixture was subjected to a crystallization reaction to precipitate (coprecipitate) the NCM composite hydroxide (crystallization reaction). Until 20 hours after the start of this crystallization reaction, during the dropwise addition, the reaction liquid (in the reaction vessel) was maintained at 25°C to 35°C and maintained at pH 11.5 to 12.0 by adding a sodium hydroxide aqueous solution, and the ammonium ion concentration was controlled to 5 g/L by adding ammonia water (first step). After 20 to 40 hours from the start of the crystallization reaction, during the dropwise addition, the reaction liquid (in the reaction vessel) was maintained at 25°C to 35°C and maintained at pH 10.8 to 11.3 by adding sulfuric acid, and the ammonium ion concentration was controlled to 12 g/L by adding ammonia water (second step). Subsequently, the obtained coprecipitate (hydroxide particles) was filtered and washed with water, and then dried in an oven at 120°C to obtain a powder. Thereby, a powder of NCM composite hydroxide (Ni_{0.8}Co_{0.1}Mn_{0.1}(OH)₂) was obtained as the CAM precursor.

Subsequently, the obtained NCM composite hydroxide powder and a lithium hydroxide (LiOH) powder were mixed in a molar ratio of Li:(Ni+Co+Mn)=1.04:1.00 to prepare a mixed powder (mixed powder preparation step). This mixed powder was then calcined under ambient atmosphere at 710°C for 15 hours (calcination step) to obtain a lithium composite oxide powder as the cathode active material (CAM) in Example 1. The CAM particle in this powder had a composition of Li_{1.04}Ni_{0.8}Co_{0.1}Mn_{0.1}O₂, and the secondary particles had an average particle diameter D₅₀ of 13 µm.

### <Preparation of Cathode>

First, a cathode current collector, and a cathode slurry for forming the cathode active material layer on the current collector were prepared. The cathode current collector was an aluminum foil having a thickness of 13 µm. The cathode slurry was obtained by kneading a mixture containing the aforementioned CAM, carbon black (CB) as a conductive material, and polyvinylidene fluoride (PVDF) as a binder in a mass ratio of CAM:CB:PVDF=100:1.5:1 and additionally containing a predetermined amount of N-methyl-2-pyrrolidone (NMP) as a solvent. Subsequently, both sides of the cathode current collector were coated with the cathode slurry to form coating films, which were then dried to form CAM layers. Subsequently, the cathode current collector having the CAM layer was rolled using a roller so that the CAM layer had a thickness of 70 µm and was at a density of 3.55 g/cm³. As described above, the cathode of Example 1 was prepared. In this cathode, a CAM layer is provided on each of both sides of the cathode current collector.

### <Preparation of Anode>

First, an anode current collector, and an anode slurry for forming an anode active material layer (AAM layer) on the anode current collector were prepared. The anode current collector is a copper foil having a thickness of 8 µm. The anode slurry was obtained by kneading, in an ion-exchanged water, graphite as the anode active material (AAM), styrene-butadiene rubber (SBR) as the binder, and carboxymethylcellulose (CMC) as the thickener in a mass ratio of AAM:SBR:CMC=100:0.7:1. Subsequently, both sides of the anode current collector were coated with the anode slurry to form a coating film, then the coating film was dried to form an AAM layer. Then, the anode current collector having the AAM layer was rolled so as to have a predetermined thickness using a roller. As described above, the anode of Example 1 was prepared.

### <Preparation of Secondary Battery>

First, the aforementioned cathode and anode were cut out into a cathode sheet (CAM layer/cathode current collector/CAM layer) and an anode sheet (AAM layer/anode current collector/AAM layer). Furthermore, a separator having a two-layer structure of polyethylene/heat resistance layer was also prepared. Then, the cathode sheet, the separator, and the anode sheet were laminated in this order to obtain a laminated electrode body. In this electrode body, the heat resistance layer of the separator was in contact with the CAM layer of the cathode sheet and the cathode and anode current collectors had exposed regions. Subsequently, the cathode current collector (aluminum foil) of the cathode sheet in the laminated electrode body was welded to a cathode lead (aluminum plate) for external current collection, and the anode current collector (copper foil) of the anode sheet was welded to an anode lead (copper plate) for external current collection. The electrode body of the laminated electrode body with the lead was inserted into an exterior casing (a pouch made of laminated aluminum film), and a nonaqueous electrolytic solution was injected into the exterior casing, which was left to stand for 12 hours, and then the exterior casing was sealed. The nonaqueous electrolytic solution contained a mixed solvent of ethylene carbonate (EC), ethyl methyl carbonate (EMC), and dimethyl carbonate (DMC) (EC:EMC:DMC=30:30:40 [volume ratio]), as well as LiPF₆ (concentration: 1.15 mol/L) as the electrolyte, which is soluble in this mixed solvent. As described above, the secondary battery (lithium ion battery) of Example 1 was prepared. In this secondary battery, the laminated electrode body and the nonaqueous electrolytic solution are enclosed in an exterior casing (pouch), and a part on each distal end side of the cathode lead and anode lead in the laminated electrode body is exposed to the outside of the exterior casing.

### [Example 2]

A cathode active material of Example 2 was prepared in the same manner as in Example 1 except that the following process was performed. In the first step of the crystallization reaction for obtaining the NCM composite hydroxide, the ammonium ion concentration in the reaction liquid was controlled to 7 g/L. In the mixed powder preparation step, a powder of the NCM composite hydroxide and a powder of lithium hydroxide (LiOH) were mixed in a molar ratio of Li:(Ni+Co+Mn)=1.06:1.00 to obtain a mixed powder. In the calcination step, the mixed powder was calcined under ambient atmosphere at 690°C for 15 hours. The prepared cathode active material had a composition of Li_{1.06}Ni_{0.8}Co_{0.1}Mn_{0.1}O₂, and the secondary particles had an average particle diameter D₅₀ of 12 µm.

The cathode, anode, and secondary battery of Example 2 were prepared in the same manner as described above in Example 1 except that the cathode active material of Example 2 was used.

### [Example 3]

A cathode active material of Example 3 was prepared in the same manner as described above in Example 1 except that the following process was performed. In the first step of the crystallization reaction for obtaining the NCM composite hydroxide, the ammonium ion concentration in the reaction liquid was controlled to 8 g/L. In the mixed powder preparation step, a powder of the NCM composite hydroxide and a powder of lithium hydroxide (LiOH) were mixed in a molar ratio of Li:(Ni+Co+Mn)=1.02:1.00 to obtain a mixed powder. In the calcination step, the mixed powder was calcined under ambient atmosphere at 720°C for 15 hours. The prepared cathode active material had a composition of Li_{1.02}Ni_{0.8}Co_{0.1}Mn_{0.1}O₂, and the secondary particles had an average particle diameter D₅₀ of 12 µm.

The cathode, anode, and secondary battery of Example 3 were prepared in the same manner as described above in Example 1 except that the cathode active material of Example 3 was used.

### [Comparative Example 1]

A cathode active material of Comparative Example 1 was prepared in the same manner as described above in Example 1 except that the following process was performed. In the mixed powder preparation step, a powder of the NCM composite hydroxide and a powder of lithium hydroxide (LiOH) were mixed in a molar ratio of Li:(Ni+Co+Mn)=1.00:1.00 to prepare a mixed powder. In the subsequent calcination step, the calcination temperature was set to 740°C. The prepared cathode active material had a composition of Li_{1.00}Ni_{0.8}Co_{0.1}Mn_{0.1}O₂, and the secondary particles had an average particle diameter D₅₀ of 14 µm.

The cathode, anode, and secondary battery of Comparative Example 1 were prepared in the same manner as described above in Example 1 except that the cathode active material of Comparative Example 1 was used.

### [Comparative Example 2]

A cathode active material of Comparative Example 2 was prepared in the same manner as described above in Example 1 except that the following process was performed. For the crystallization reaction for obtaining the cathode active material precursor, the reaction liquid was previously adjusted to pH 11.0 (at 25°C), and during the reaction, the reaction liquid was maintained at pH 11.0 while controlling the ammonium ion concentration to 10 g/L, and the reaction time was set to 40 hours. The prepared cathode active material had a composition of Li_{1.04}Ni_{0.8}Co_{0.1}Mn_{0.1}O₂, and the secondary particles had an average particle diameter D₅₀ of 13 µm.

The cathode, anode, and secondary battery of Comparative Example 2 were prepared in the same manner as described above in Example 1 except that the cathode active material of Comparative Example 2 was used.

### [Comparative Example 3]

The cathode active material of Comparative Example 3 was prepared in the same manner as described above in Example 1 except that the following process was performed. In the mixed powder preparation step, a powder of the NCM composite hydroxide and a powder of lithium hydroxide (LiOH) were mixed in a molar ratio of Li:(Ni+Co+Mn)=1.10:1.00 to prepare a mixed powder. In the subsequent calcination step, the calcination temperature was set to 680°C. The prepared cathode active material had a composition of Li_{1.1}Ni_{0.8}Co_{0.1}Mn_{0.1}O₂, and the secondary particles had an average particle diameter D₅₀ of 14 µm.

The cathode, anode, and secondary battery of Comparative Example 3 were prepared in the same manner as described above in Example 1 except that the cathode active material of Comparative Example 3 was used.

### <Compositional Analysis for Cathode Active Material>

The composition of each cathode active material in Examples and Comparative Examples was confirmed using an ICP emission spectrometer (product name: "SPS3520UV-DD", manufactured by Hitachi High-Tech Science Corporation).

### <Average Particle Diameter D₅₀ of Secondary Particle>

For each cathode active material in Examples and Comparative Examples, an average particle diameter D₅₀ of the secondary particles was measured using a laser diffraction particle size distribution analyzer (product name: "MT3000II", manufactured by MicrotracBEL Corp.).

### <Triple Junction and Maximum Feret's Diameter Median of CAM Primary Particle>

For each cathode active material in Examples and Comparative Examples, the triple junctions and the maximum Feret's diameter median were determined. Specifically, the procedure was as follows.

First, a cross-sectional observation sample for observing the cross-section of the cathode active material secondary particle was prepared. Specifically, a cross-section of the secondary particle in the cathode active material 21P was obtained by cross-section polisher (CP) processing (ion milling). Subsequently, this sample was photographed in cross-sectional scanning ion microscopy (SIM) using a focused ion/electron beam processing and observation system (focused ion beam-scanning electron microscope (FIB-SEM)) (product name: "NB5000", manufactured by Hitachi High-Tech Corporation). For this observation, a magnification of 15,000× was used, and a target observation visual field was set to 9.59 µm×9.59 µm so that 300 or more primary particles could be observed per one CAM secondary particle.

Then, the maximum Feret's diameter median of the primary particles was determined by analyzing the observation images. For the image analysis, an image analysis software "Image J" (Wayne Rasband) was used. In this analysis, first, an outline of each primary particle was depicted (in the SIM image, since two adjacent primary particles are imaged with contrasts different from each other depending on differences in crystal orientations, the outline of each primary particle traces a boundary at which the contrast changes in the SIM image). After the depiction of the outline, the number of primary particles in one CAM secondary particle (the number in the image) to be observed was counted in the observation image, and furthermore, each contact point between three particles and each fine gap between the three particles in this secondary particle were surrounded by circles of a predetermined size. This circle corresponds to a circle having a diameter of 144 nm in actual size. In this analysis, a three-particle interface including a gap with a maximum Feret's diameter of smaller than 144 nm, which could be surrounded by the circle, was also regarded as a triple junction. A ratio R of the number of the triple junctions in the primary particle to the counted number of the primary particles was calculated. The calculated values are presented in Table 1.

Also, the maximum Feret's diameter median of the primary particles was determined by analysis of the observation image using the aforementioned image analysis software. In this analysis, for each of 100 primary particles randomly selected from the observation image, the maximum Feret's diameter (the largest length among the straight lines connecting any two points on the outer circumference of the selected primary particle) was measured. The median of these multiple measurement values was presented as the maximum Feret's diameter median (µm) of the primary particles in Table 1.

### <Electrode Density of Cathode>

A density (electrode density) of each cathode active material layer in Examples and Comparative Examples was determined. Specifically, the procedure was as follows.

A true density of the cathode active material layer was determined based on the density and content ratio of each component in the cathode active material layer. In a sectional observation of the cathode active material layer under a scanning electron microscope (SEM), a filling factor of the cathode active material layer was determined using the image analysis software "Image J" (Wayne Rasband). A density (electrode density) was calculated by multiplying the true density and filling factor of the cathode active material layer. The values are presented in Table 1.

### <High-Temperature Cycle Test>

Each secondary battery in Examples and Comparative Examples was subjected to initial charging and subsequently to a high-temperature cycle test for examining its capacity retention ratio. Specifically, the procedure was as follows.

In the initial charging, the secondary battery was subjected to a constant-current charge up to 4.2 V at a charging rate of 0.1 C at 25°C, and subsequently to a constant-voltage charge at 4.2 V until the charging rate reached 0.05 C. Then, the battery was subjected to a constant-current discharge down to 3.0 V at a charging rate of 0.1 C.

In the high-temperature cycle test, the secondary battery was first subjected to a constant-current charge up to 4.2V at a charging rate of 0.5 C at 60°C. Then, the charge was halted (pause), and 10 minutes after, the battery was subjected to a constant-current discharge down to 2.5 V at a discharging rate of 0.5 C (first cycle). An electric quantity extracted in this discharging process was determined as an initial discharge capacity of the secondary battery. Subsequently, the secondary battery was subjected to 199 cycles, each cycle including charging, pause, and discharging in this order under the same condition as in the initial cycle. An electric quantity extracted in the discharging process of the final cycle (the 200th cycle) was determined as the 200th cycle discharge capacity of the secondary battery. Then, a capacity retention ratio (%) was calculated by dividing the 200th cycle discharge capacity by the initial discharge capacity. The values are presented in Table 1.

For the secondary batteries of Examples 1 to 3 (the cathode active material had the ratio R of 0.94 or lower and the maximum Feret's diameter median of 1.10 µm or smaller), a high capacity retention ratio of 88.0% or higher was achieved in the high-temperature cycle test described above. In contrast, the secondary batteries of Comparative Examples 1 to 3 showed significantly lower capacity retention ratios. In Comparative Examples 1 and 2, the number of triple junctions per one primary particle (sites where strains resulting from expansion and contraction of the cathode active material accompanying charging and discharging tend to concentrate from multiple directions, leading to large local stresses), i.e. the ratio R was significantly higher compared to Examples 1 to 3. Thus, it was considered that, in Comparative Examples 1 and 2, during the high-temperature cycle test, particle cracking generated inside the secondary particle of the cathode active material progressed to increase the number of isolated regions formed in the active material, resulting in a lower capacity retention ratio compared to Examples 1 to 3. In Comparative Example 3, the maximum Feret's diameter median of the primary particles (there is a tendency that the larger the primary particle size, the greater the strain generated during expansion and contraction) was significantly larger compared to Examples 1 to 3. Thus, it was considered that, in Comparative Example 3, during the high-temperature cycle test, particle cracking progressed due to the increased local stress generated inside the secondary particle of the cathode active material to increase the number of isolated regions formed in the active material, resulting in a lower capacity retention ratio compared to Examples 1 to 3.

### [Table 1]

**Table 1**

| | Ratio R (Number of triple junctions per one primary particle) | Maximum Feret's diameter median of primary particle [µm] | Electrode density [g/cm³] | Capacity retention ratio in high-temperature cycle test [%] |
|---|---|---|---|---|
| Example 1 | 0.902 | 1.03 | 3.55 | 89.5 |
| Example 2 | 0.915 | 1.05 | 3.52 | 88.9 |
| Example 3 | 0.923 | 0.98 | 3.54 | 88.2 |
| Comparative Example 1 | 0.967 | 0.85 | 3.58 | 87.1 |
| Comparative Example 2 | 1.071 | 0.96 | 3.54 | 84.8 |
| Comparative Example 3 | 0.935 | 1.22 | 3.55 | 86.9 |

As described above, the specific aspects of the technology disclosed herein include configurations described in each item below.

### Item 1:

A cathode active material for a secondary battery, which is a lithium composite oxide having a composition represented by a formula Li₁₊ₓNi_{α}Co_{β}Mn_{γ}M_{δ}O₂ [wherein 0.01≤x≤0.07, 0.7≤α≤1, 0≤β≤0.3, 0≤γ≤0.3, 0≤δ≤0.1, α+β+γ=1, and M is at least one element selected from the group consisting of B, Al, Mg, Ca, Ti, V, Cr, Ga, Zr, Nb, Mo, In, Hf, Ta, W, and Tl], and has a form of a secondary particle that is an aggregate of primary particles, in which
in the secondary particle, a ratio R of the number of triple junctions of the primary particles to the number of the primary particles is 0.94 or lower, and the primary particles have a maximum Feret's diameter median of 1.10 µm or smaller.

### Item 2:

The cathode active material according to Item 1, in which the ratio R is 0.90 or higher.

### Item 3:

The cathode active material according to Item 1 or 2, in which the maximum Feret's diameter median is 0.90 µm or larger.

### Item 4:

The cathode active material according to any one of Items 1 to 3, in which the secondary particles have an average particle diameter D₅₀ of 10 to 20 µm.

### Item 5:

An electrode including:
a current collector and an electrode active material layer on the current collector, in which
the electrode active material layer contains the cathode active material according to any one of Items 1 to 4.

### Item 6:

The electrode according to Item 5, in which the electrode active material layer has an electrode density of 3.2 to 3.7 g/cm³.

### Item 7:

A secondary battery including:
an electrode body having a cathode and an anode, in which
the cathode includes a current collector and a cathode active material layer on the current collector, and
the cathode active material layer contains the cathode active material according to any one of Items 1 to 4.

The specific examples of the present invention have been explained in detail above, but these examples are merely illustrative and do not limit the scope of claims. The technology described in claims includes variations and modifications of the specific examples illustrated above.

## Claims

1. A cathode active material (21P) for a secondary battery (100), the material being a lithium composite oxide having a composition represented by a formula Li₁₊ₓNi_{α}Co_{β}Mn_{γ}M_{δ}O₂ [wherein 0.01≤x≤0.07, 0.7≤α≤1, 0≤β≤0.3, 0≤γ≤0.3, 0≤δ≤0.1, α+β+γ=1, and M is at least one element selected from the group consisting of B, Al, Mg, Ca, Ti, V, Cr, Ga, Zr, Nb, Mo, In, Hf, Ta, W, and T1] and having a form of a secondary particle, the secondary particle being an aggregate of primary particles (21p), wherein
in the secondary particle, a ratio R of the number of triple junctions of the primary particles (21p) to the number of the primary particles (21p) is 0.94 or lower, and the primary particles (21p) have a maximum Feret's diameter median of 1.10 µm or smaller.

2. The cathode active material (21P) according to claim 1, wherein the ratio R is 0.90 or higher.

3. The cathode active material (21P) according to claim 1 or 2, wherein the maximum Feret's diameter median is 0.90 µm or larger.

4. The cathode active material (21P) according to any one of claims 1 to 3, wherein the secondary particles have an average particle diameter D₅₀ of 10 to 20 µm.

5. An electrode (21) comprising:
a current collector (21C) and an electrode active material layer (21A) on the current collector (21C),
wherein the electrode active material layer (21A) contains the cathode active material (21P) according to any one of claims 1 to 4.

6. The electrode (21) according to claim 5, wherein the electrode active material layer (21A) has an electrode density of 3.2 to 3.7 g/cm³.

7. A secondary battery (100) comprising an electrode body (20) comprising:
a cathode (21) and an anode (22), wherein
the cathode (21) comprises a current collector (21C) and a cathode active material layer (21A) on the current collector (21C), and
the cathode active material layer (21A) contains the cathode active material (21P) according to any one of claims 1 to 4.
